# EUROPEAN PATENT APPLICATION

(11) **EP 4 800 588 A1**
(43) Date of publication of application: **02.09.2026**
(21) Application number: 25160961.6
(22) Date of filing: 28.02.2025
(51) Int. Cl.: G06F 21/57, G06F 9/4401, H04L 9/32

(54) **METHOD FOR ENABLING VERIFICATION OF DIGITAL SIGNATURES OF BOOT LAYERS OF A DEVICE**

(71) Applicant: Siemens Aktiengesellschaft, 80333 München (DE)
(72) Inventor: Budak, Utku, 81927 München (DE); De Santis, Fabrizio, 80634 München (DE); Safieh, Malek, 81539 München (DE)
(74) Representative: Siemens Patent Attorneys

(57) **Abstract**

The present disclosure provides a method for enabling verification of digital signatures of boot layers (L_n) of a device, in which at least one cryptographic authentication tag (Tag_ref_n) that is verifiable with only symmetric cryptography is issued for boot layer (L_n) verification. The authentication tag (Tag_ref_n) may be issued during boot time or at manufacturing time. The device may be configured for verifying digital signatures (Signature_n) of boot layers (L_n), and the authentication tag (Tag_ref_n) may be issued to the device. The method allows for efficient and secure boot layer verification using symmetric cryptography, potentially improving boot time and security.

## Description

The present invention relates to a method for enabling verification of digital signatures of boot layers of a device, particularly for computing devices. The invention particularly addresses a method that allows an efficient boot of the device while at the same time allowing a safe verification of boot layers.

The boot process of computing devices plays a crucial role in initializing peripherals and starting core functionalities. This phase is not only essential from a functional perspective but also from a security standpoint. As devices become more interconnected and handle sensitive data, ensuring the integrity and authenticity of the boot process has become increasingly important.

Secure boot mechanisms aim to prevent the execution of unauthorized code during a device's boot sequence. These mechanisms typically leverage cryptographic techniques to verify the integrity and authenticity of boot components before execution. Traditional approaches often rely on asymmetric cryptography, using digital signatures to validate boot layers.

However, existing secure boot implementations face several challenges. One issue is the computational overhead associated with verifying digital signatures, which can lead to increased boot times. This can be particularly problematic for devices with strict timing requirements or resource constraints. Additionally, as quantum computing advances, there are concerns about the long-term security of some widely-used asymmetric cryptographic algorithms.

Another challenge lies in achieving an appropriate balance between security and flexibility. While robust verification is necessary to prevent attacks, overly rigid boot processes can complicate legitimate software updates or recovery procedures. Furthermore, implementing secure boot on devices already deployed in the field can present difficulties, as it may require significant changes to existing hardware or firmware.

Cyber-resilience is an emerging concern in secure boot design. Beyond simply preventing unauthorized code execution, there is a growing need for boot mechanisms that can detect various types of manipulations and respond appropriately. This includes the ability to perform efficient recovery procedures when integrity violations are detected, without unnecessarily disrupting device operation.

It is therefore the object of the present invention to provide a method for enabling verification of digital signatures of boot layers of a device that overcomes one or more of these problems.

This object of the present invention is solved with a method for enabling verification of digital signatures of boot layers of a device with the features contained in claim 1. Advantageous aspects of the invention are contained in the subsequent dependent claims, the following description and the drawing.

The invention provides a method for enabling verification of digital signatures of boot layers of a device. The method according to the invention includes issuing at least one cryptographic authentication tag that is verifiable with only symmetric cryptography for boot layer verification. This method allows for faster and more efficient boot layer verification compared to traditional asymmetric cryptography methods, while still maintaining a high level of security. The use of symmetric cryptography for verification reduces computational overhead and improves boot time.

In another advantageous aspect of the method according to the invention, the authentication tag is issued for boot layer verification that is performed during boot time. A boot layer verification during boot time allows for up-to-date verification, ensuring that the most current security measures are applied each time the device boots. At the same time, symmetric cryptography can be quickly performed even on legacy devices without significant delays, so that real-time demands can be reliably ensured.

In another advantageous aspect of the method according to the invention, the issuing of the authentication tag is carried out at manufacturing time. Implementing the method at manufacturing time provides a secure foundation for the device from its initial deployment, reducing the risk of tampering or compromise before the device reaches the end user.

In another advantageous aspect of the method according to the invention, the device is configured for verifying digital signatures of boot layers and the at least one authentication tag is issued to the device, in particular only then, when the digital signatures Signature_n of the boot layers L_n are successfully verified. This configuration allows for a hybrid approach, combining the security benefits of digital signatures with the efficiency of symmetric cryptography, providing a robust and flexible boot layer verification. Advantageously, the method according to this aspect can be carried out even on legacy devices or devices with reduced computational resources.

In another advantageous aspect of the method according to the invention, the method includes verifying the boot layers when they are updated and newly generating and issuing the at least one authentication tag. This aspect of the method according to the invention ensures that the verification process remains current and effective even as the device's software is updated, maintaining security throughout the device's lifecycle.

In another advantageous aspect of the method according to the invention, the at least one authentication tag is implemented on the device, preferably only on the device. On-device implementation of the authentication tag enhances security by keeping sensitive cryptographic material within the device's trusted environment.

In a further advantageous aspect of the method according to the invention, the method includes issuing the at least one authentication tag after a prior public key verification of a public key of an issuing entity issuing or certifying one, some or all the boot layers. This additional step provides an additional layer of security by verifying the authenticity of the entity responsible for the boot layers before issuing the authentication tag. Certifying one, some or all the boot layers may in a particularly advantageous aspect of the invention involve signing one, some or all the boot layers. Thus, in a particularly advantageous aspect of the invention, the root for the integrity of the signatures of the boot layers, namely the public key of an entity issuing the boot layers, is additionally verified. After successful verification of the integrity of the public key, the at least one authentication tag is issued.

In another advantageous aspect of the method according to the invention, the public key is integrity protected. Integrity protection of the public key prevents unauthorized modification, ensuring the trustworthiness of the verification process.

In another advantageous aspect of the method according to the invention, it includes integrity protecting, and preferably read protecting, an algorithm and/or key material of the symmetric cryptography. This protection safeguards the core components of the symmetric cryptography, preventing unauthorized access or tampering that could compromise the security of the verification process.

In another advantageous aspect of the method according to the invention, it includes integrity protecting the prior public key verification, which involves asymmetric and preferably also symmetric algorithms. Integrity protection of the verification process itself ensures that the entire chain of trust remains secure from the initial public key verification through to the final boot layer verification.

In another advantageous aspect of the method according to the invention, it includes using an update control process that checks which boot layers are affected by one or more updates and issues authentication tags for those layers, preferably only for those layers, that are updated.

This targeted approach to updating authentication tags improves efficiency by only reissuing tags for modified boot layers, reducing unnecessary cryptographic operations and key authentication tag provisions.

In another advantageous aspect of the method according to the invention, it includes checking the public key during or after boot layer verification and restricting the functionality of the device when or as long as the public key is not verified.

This feature provides an additional security measure by ensuring that the device operates with full functionality only when the entire verification process, including the public key, is successful.

In another advantageous aspect of the method according to the invention, it includes checking the verification with symmetric cryptography using also asymmetric cryptography for boot layer verification. This dual verification approach combines the speed of symmetric cryptography with the added security of asymmetric cryptography, providing a comprehensive verification process.

In a further aspect of the invention, a device with boot layers is provided. The device is configured to carry out a method according to any of the previously described aspects. In particular, the device is able to carry out the check of the validity of a public key with asymmetric cryptography means and able to issue an authentication tag for boot layer verification, that is intended during boot time. In this particularly advantageous aspect of the invention, the authentication tag is issued to the device by the device itself, so that it does not necessarily ever leave the device, which mitigates further security risks.

In the following, the invention is described in more details with the help of the drawing, in which
- Fig. 1: shows a schematic block diagram of a secure boot system, according to aspects of the present disclosure and
- Fig. 2: shows a schematic block diagram of a secure boot system architecture implementing the method according to the invention with cryptographic components of the secure boot system shown in Fig. 1.

Common reference numerals are used throughout the figures to indicate similar features.

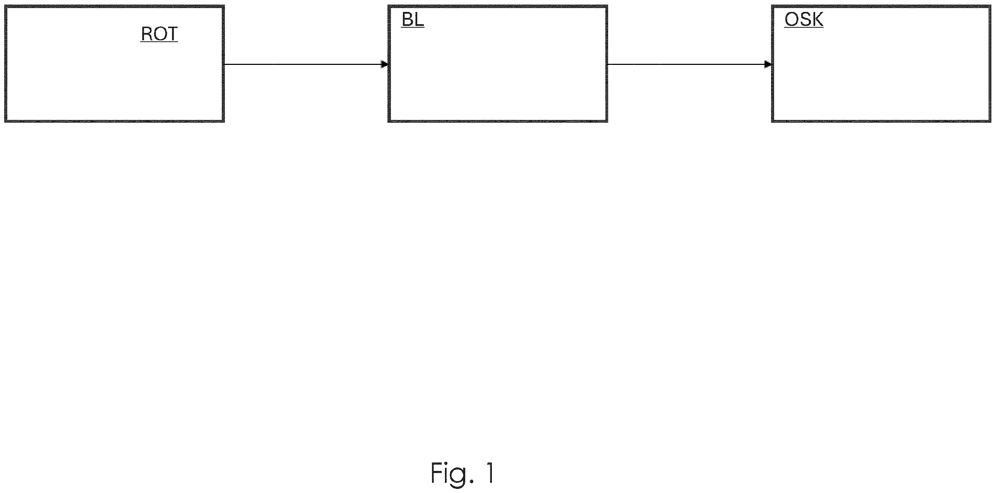

A secure boot system provides a mechanism to ensure that authorized code is executed during the boot process of a device. Fig. 1 illustrates a block diagram of a secure boot system. The system comprises three main components: a Root of Trust ROT, a Boot Loader BL, and an Operating System Kernel OSK.

A Root of Trust ROT serves as the initial trusted component in the secure boot process. The ROT is typically implemented in hardware or firmware that cannot be easily modified. The ROT verifies the integrity and authenticity of the next component in the boot sequence.

A Boot Loader BL is the second stage in the boot process. The Boot Loader BL is responsible for initializing hardware components and loading the operating system kernel. The Boot Loader BL is verified by the Root of Trust ROT before execution.

An Operating System Kernel OSK represents the core of the operating system that manages system resources and provides services. The Operating System Kernel OSK is loaded and verified by the Boot Loader BL before execution.

The secure boot system implements a method for enabling verification of digital signatures of boot layers of the device. This method uses at least one cryptographic authentication tag that is verifiable with symmetric cryptography. The device with boot layers is configured to carry out this method for enabling verification of digital signatures of boot layers.

The device is also configured to issue the at least one cryptographic authentication tag.

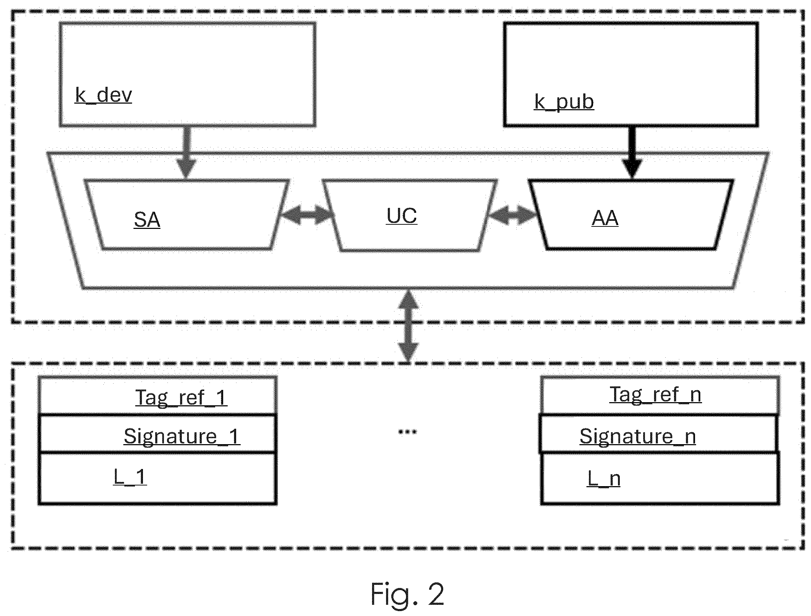

Fig. 2 illustrates a block diagram of a hybrid secure boot architecture that combines symmetric and asymmetric cryptography. The architecture includes a Symmetric Algorithm SA and an Asymmetric Algorithm AA.

A Protected Symmetric Device Key k_dev serves as input to the Symmetric Algorithm SA. The Symmetric Algorithm SA can be implemented as a message authentication code (MAC), HMAC, KMAC, CMAC, AEAD, ASCON, or AES-GCM.

A Public Key k_pub is used as input to the Asymmetric Algorithm AA. The Public Key k_pub or its hash can be stored in one-time programmable (OTP) eFuses to prevent alteration. The Asymmetric Algorithm AA can be implemented as a post-quantum cryptography (PQC) algorithm to provide protection against future quantum computing attacks. The Public Key k_pub is provided by the manufacture of the device or by a trusted authority signing boot layers of the device, such as providers of the boot layers of the device.

An Update Controller UC also implemented on the device that ensures that the Symmetric Algorithm SA is updated after updates of one or more of the boot layers L_1 to L_n.

The architecture contains multiple boot layers, represented by L_1 to L_n. Each boot layer L_1 to L_n is associated with both an Authentication Tag, Tag_ref_1 to Tag_ref_n, and a Signature Signature_1 to Signature_n. The Authentication Tags Tag_ref_1 to Tag_ref_n are resulting from the method according to the invention.

The Signatures Signature_1 to Signature_n have been issued and provided to the device by the same entity, that provides the Public Key k_pub. This way, the authenticity of the Boot Laysers L_1 to L_n can be verified first with the Public Key k_pub to be issued or authorized by this entity.

The Signatures Signature_1 to Signature_n are verified first using the Asymmetric Algorithm AA with the Public Key k_pub as input. This provides a root of security verification for the boot layers L_1 to L_n.

In case this verification of the Signatures Signature_1 to Signature_n is successful, the Authentication Tags Tag_ref_1 to Tag_ref_n are then generated using the Symmetric Algorithm SA with the Protected Symmetric Device Key k_dev as input. These tags Tag_ref_1 to Tag_ref_n are then, according to the invention, issued to the device and subsequently used to verify the integrity of the corresponding Boot Layers L_1 to L_n during boot time.

During boot time, the Symmetric Algorithm SA verifies the Authentication Tag 1 Tag_ref_1 to the Authentication Tag n Tag_ref_n for each corresponding Boot Layer 1 L_1 to Boot Layer n L_n. The Authentication Tags are used to verify the integrity of the boot layers efficiently using symmetric cryptography.

In addition, the Asymmetric Algorithm AA verifies the Signatures Signature_1 to Signature_n and/or Public Key k_pub using the Asymmetric Algorithm AA. If the Signatures Signature_1 to Signature_n or the Public Key k_pub is/are not verified, the device functionality is restricted to ensure security. The verification process using symmetric cryptography, performed by the Symmetric Algorithm SA, is checked against the verification performed by the Asymmetric Algorithm AA. This dual verification approach enhances the security of the boot process by combining the efficiency of symmetric cryptography with the robustness of asymmetric cryptography. In particular, the verification of the Signatures Signature_1 to Signature_n may be finished later than the verification of the authentication tags Tag_ref_1 to Tag_ref_n, so that the device can start quickly and at the same time security critical features can be granted after successful verification of the Signatures_1 to Signature_n as well.

The Update Controller UC manages the update process for the Authentication Tags Tag_ref_1 to Tag_ref_n of the boot layers, ensuring proper verification and authentication during updates. When updates are applied to the boot layers, the Update Controller UC triggers the regeneration of the Authentication Tags Tag_ref_1 to Tag_ref_n and verifies the updated Signatures Signature_1 to Signature_n.

The provisioning phase for devices not yet deployed is carried out at manufacturing time. During this phase, an initial configuration is performed to establish the secure boot process.

A Public Key k_pub of an issuing entity that issues or certifies boot layers is verified. This Public Key k_pub verification involves asymmetric algorithms and may also involve symmetric algorithms. The algorithms used for Public Key k_pub verification are integrity protected to prevent tampering.

After successful verification of the Public Key k_pub, the Signatures Signature_1 to Signature_n of the Boot Layers L_1 to L_n are verified. Also the Asymmetric Algorithm AA used for Signature Signature_1 to Signature_n verification is integrity protected to prevent tampering.

After successful verification of the Signatures Signature_1 to Signature_n, the at least one Authentication Tag Tag_ref_1 is issued for boot layer verification. The Authentication Tag Tag_ref_1 is generated using symmetric cryptography using the Symmetric Algorithm SA.

The algorithm and key material used for the symmetric cryptography are integrity protected. Additionally, the key material for the symmetric cryptography is preferably read protected to prevent unauthorized access. This protection can be implemented using secure hardware elements or cryptographic techniques.

During the provisioning phase, a Protected Symmetric Device Key k_dev is generated or imprinted. This Protected Symmetric Device Key k_dev is used to compute the Authentication Tags Tag_ref_1 to Tag_ref_n for each boot layer. These Authentication tags Tag_ref_1 to Tag_ref_n are attached to the corresponding Boot Layers L_1 to L_n. The computation of Authentication Tags Tag_ref_1 to Tag_ref_n occurs after successfully verifying the digital Signatures 1 Signature_1 to n Signature_n from the trusted party on the corresponding layers. The Protected Symmetric Device Key k_dev does not need to be stored outside the device, as it is only used internally.

The provisioning phase establishes the foundation for the secure boot process.

During the regular operation phase, the device enters its normal operating mode, which begins with a device reset. Upon reset, the verification unit is executed to initiate the secure boot process.

The verification unit starts by verifying the integrity and authenticity of the first Boot Layer 1 L_1. This verification is performed by calculating a current Authentication Tag Tag_ref_1 for the first Boot Layer 1 L_1 using the Symmetric Algorithm SA and the Protected Symmetric Device Key k_dev. The calculated tag is then compared against the reference Authentication Tag Tag_ref_1 attached to the boot layer.

If a mismatch is detected during the Authentication Tag Tag_ref_1 verification, the boot process terminates. However, if the verification is successful, the device ensures that the verified Boot Layer 1 L_1 is authentic and can be executed safely.

This process continues sequentially for each subsequent Boot Layer n L_n until all layers have been verified. Each Boot Layer n L_n is associated with its own Authentication Tag n Tag_ref_n, which is verified before the respective Boot Layer n L_n is executed.

In a multi-core configuration, one core can be dedicated to verifying the digital Signatures n Signature_n while another core simultaneously performs the symmetric verification of Authentication Tags n Tag_ref_n. This parallel processing allows for faster boot times while maintaining a high level of security.

In the depicted embodiment, the Authentication Tag n Tag_ref_n verification is implemented directly on the device, utilizing the device's internal cryptographic capabilities. This on-device implementation ensures that the verification process is secure and cannot be easily tampered with by external entities.

The hybrid secure boot system can be integrated into devices already deployed in the field through firmware updates. This integration allows existing devices to benefit from the enhanced security and efficiency of the hybrid approach without requiring hardware modifications.

When a firmware update is applied to an already deployed device, the update process includes the installation of the hybrid secure boot functionality. This functionality comprises both asymmetric and symmetric cryptographic algorithms for verifying boot layers.

During the update process, the boot layers are verified to ensure their integrity and authenticity. After successful verification, new Authentication Tags Tag_ref_1 to Tag_ref_n are generated and issued for each updated boot layer. These authentication tags are computed using the device-specific symmetric key k_devand attached to their corresponding boot layers L_1 to L_n.

An update control process is implemented in the Update Controller UC to manage the integration of the hybrid secure boot system. This process checks which Boot Layers L_n are affected by the update and issues new authentication tags Tag_ref_n specifically for those updated Boot Layers L_n. By selectively updating only the affected Boot Layers L_n, the process minimizes the impact on the overall system and reduces the time required for the update.

To enhance the security of the update process, the Update Controller UC carrying out the steps outlined above is in an embodiment implemented within a Trusted Execution Environment, such as ARM TrustZone. This implementation provides an isolated and secure environment for handling sensitive operations related to boot layer verification and authentication tag generation.

The system detects three main cases of manipulations:
In the first case, some symmetric Authentication Tag Tag_ref_n verifications result in a mismatch, but the corresponding digital signatures Signature_n are successfully verified. This indicates that the Boot Layers n L_n are still intact based on the digital signature verifications, but some symmetric authentication tags Tag_ref_n have been manipulated. The recovery procedure for this case involves repeating the provisioning phase to recompute the individual symmetric authentication tags Tag_ref_n that resulted in a mismatch. This recovery process does not require updating the device-specific symmetric key k_dev used for symmetric authentication tag computations, reducing the overall complexity of the recovery.

In the second case, all symmetric authentication tag verifications Tag_ref_1 to Tag_ref_n result in a mismatch, but the corresponding digital signatures Signature_1 to Signature_n are successfully verified. This scenario suggests that the Boot Layers L_1 to L_n are still intact based on the digital signature verifications, but all symmetric authentication tags Tag_ref_1 to Tag_ref_n have been manipulated. This manipulation indicates that the device-specific symmetric key for the symmetric authentication tag calculation has been compromised. The recovery procedure for this case involves repeating the provisioning phase, generating a new device-specific symmetric key k_dev, and recomputing all symmetric authentication tags Tag_ref_1 to Tag_ref_n with the new key k_defv. While this recovery process is more complex than the first case, it is still less resource-intensive than recovering the boot layers themselves.

In the third case, both the symmetric authentication tag and the digital signature verifications result in a mismatch. This scenario indicates that the content of the boot layers L_1 to L_n has been manipulated, necessitating a recovery of the boot layers L_1 to L_n. The recovery procedure for this case involves recovering the boot layers from a golden copy. After the recovery of the boot layers L_1 to L_n, the system performs the provisioning phase to generate a new device-specific symmetric key k_dev and compute the corresponding symmetric authentication tags Tag_ref_1 to Tag_ref_n over the recovered boot layers L_1 to L_n.

In an embodiment, the Protected Symmetric Device Key k_dev is derived from device-specific properties using a Physical Unclonable Function (PUF) or Device Identifier Composition Engine (DICE). This approach enhances the security of the hybrid secure boot system by tying the cryptographic key to unique physical characteristics of the device, making it more resistant to cloning or tampering attempts.

In a further embodiment, the Symmetric Algorithm SA is used to protect not only the integrity, but both the integrity and confidentiality of Boot Layers L_n. In addition to generating authentication tags for integrity verification, the Symmetric Algorithm SA encrypts the Boot Layers L_n themselves. This encryption provides an additional layer of protection against unauthorized access or modification of the boot code.

In another embodiment, multiple different Protected Symmetric Device Keys k_dev are used for different Boot Layers L_n. Each Boot Layer L_n is associated with a unique Protected Symmetric Device Key k_dev, allowing for more granular control over the security of individual components in the boot process. This approach can help isolate potential vulnerabilities and limit the impact of a compromised key to a specific Boot Layer L_n.

The hybrid secure boot system supports the use of various symmetric cryptographic algorithms for generating authentication tags and encrypting Boot Layers L_n. These algorithms may include, but are not limited to, Advanced Encryption Standard (AES) in different modes of operation, such as Galois/Counter Mode (GCM) or Cipher Block Chaining (CBC), as well as dedicated authenticated encryption algorithms like ChaCha20-Poly1305.

In some embodiments, the hybrid secure boot system incorporates a key rotation mechanism for the Protected Symmetric Device Keys k_dev. This mechanism periodically updates the keys used for authentication tag generation and Boot Layer L_n encryption, reducing the risk associated with long-term key exposure.

In certain implementations, the hybrid secure boot system integrates with a Trusted Execution Environment (TEE) on the device. The TEE provides an isolated and secure area for storing sensitive cryptographic material, such as the Protected Symmetric Device Keys k_dev, and for performing security operations related to the boot process.

The system supports the use of hardware-backed key storage, such as secure elements or trusted platform modules (TPMs), for protecting the Protected Symmetric Device Keys k_dev and other sensitive cryptographic material. This hardware-based protection adds an extra layer of security against software-based attacks.

The system allows for the integration of external security modules or hardware security modules (HSMs) for performing cryptographic operations related to the boot process. This integration can provide additional security and performance benefits, especially for devices with limited computational resources.

The systems and methods described herein may be implemented in any form of computing or electronic device. The term "computer," as used herein, encompasses any device with processing capabilities sufficient to execute instructions. This includes, but is not limited to, personal computers, servers, mobile devices, personal digital assistants, and similar devices. Such devices may include one or more processors, such as microprocessors, controllers, or other suitable types of processors, capable of executing instructions to control the device's operation. For example, in some implementations using a system-on-a-chip architecture, the processors may include fixed-function blocks (hardware accelerators) that perform parts of the method in hardware rather than software or firmware. Platform software, such as an operating system or similar, may be installed to support the execution of application software.

The described functionality may be implemented in hardware, software, or any combination thereof. When implemented in software, the instructions or code can be stored on or transmitted via a computer-readable medium. Such media include computer-readable storage media, which may be volatile or non-volatile, removable or non-removable, and implemented using any technology for storing information such as program code, data structures, or other data. Examples include, but are not limited to, ROM, EEPROM, RAM, magnetic or optical storage, flash memory, or any other storage medium accessible by a computer. Communication media that facilitate the transfer of software, such as via coaxial cables, fiber optics, DSL, or wireless signals, may also be considered part of computer-readable media.

Alternatively, or in addition, some or all of the described functionality may be implemented using hardware logic components. Examples include, but are not limited to, application-specific integrated circuits, system-on-a-chip systems, field-programmable gate arrays, application-specific standard products, and complex programmable logic devices. In some cases, software instructions may also be implemented in dedicated circuits, such as programmable logic arrays or digital signal processors.

The computing device may operate as a standalone system or as part of a distributed system, where tasks are performed collectively by multiple devices connected via a network. Such devices may communicate over a network connection to perform the described functionality. For instance, software may be stored on a remote computer and accessed by a local device, which may download and execute portions of the software as needed. Similarly, some instructions may be processed locally, while others may execute on remote systems or networks. In some cases, the computing device may be remote and accessible via a communication interface. Storage of program instructions may also be distributed across a network or stored in a combination of local and remote locations. For example, software may reside on a remote computer and be accessed by a local terminal, or the system may execute some software locally while other components operate on remote servers.

Features of any of the examples or embodiments outlined above may be combined to create additional examples or embodiments without losing the intended effect. It should be understood that the description of an embodiment or example provided above is by way of example only, and various modifications could be made by one skilled in the art. Furthermore, one skilled in the art will recognise that numerous further modifications and combinations of various aspects are possible. Accordingly, the described aspects are intended to encompass all such alterations, modifications, and variations that fall within the scope of the appended claims.

## Claims

1. Method for enabling verification of digital signatures of boot layers (L_n) of a device, in which at least one cryptographic authentication tag (Tag_ref_n) that is verifiable with only symmetric cryptography is issued for boot layer (L_n) verification.

2. Method according to claim 1, in which the authentication tag (Tag_ref_n) is issued for boot layer (L_n) verification, that is performed during boot time.

3. Method according to any of the previous claims, which is carried out at manufacturing time.

4. Method according to of the previous claims, wherein the device is configured for verifying digital signatures (Signature_n) of boot layers (L_n) and wherein then, when the verification of the digital Signatures Signature_n is successful, the at least one authentication tag (Tag_ref_n) is issued to the device.

5. Method according to any of the previous claims, wherein the boot layers (L_n) are verified when they are updated, and the at least one authentication tag (Tag_ref_n) is newly generated and issued.

6. Method according to any of the previous claims, wherein the at least one authentication tag (Tag_ref_n) is implemented on the device.

7. Method according to any of the previous claims, wherein the at least one authentication tag (Tag_ref_n) is issued after a prior public key (k_pub) verification of a public key (k_pub) of an issuing entity issuing or certifying one, some or all of the boot layers (L_n).

8. Method according to any of the previous claims, wherein the public key (k_pub) is integrity protected.

9. Method according to any of the previous claims, wherein an algorithm and/or key material of the symmetric cryptography is integrity protected, and preferably read protected.

10. Method according to any of the previous claims, wherein the prior public key (k_pub) verification involves asymmetric and preferably also symmetric algorithms, that are integrity protected.

11. Method according to any of the previous claims, wherein an update control process is used that checks, which boot layers (L_n) are affected by one or more updates and which issues authentication tags (Tag_ref_n) for those layers that are updated.

12. Method according to any of the previous claims, wherein the public key (k_pub) is also checked during boot layer (L_n) verification and wherein the device is restricted in functionality, when the public key (k_pub) is not verified.

13. Method according to any of the previous claims, wherein the verification with symmetric cryptography is checked with asymmetric cryptography.

14. Device with boot layers (L_n), that is configured to carry out a method according to any of the previous claims.
